# EUROPÄISCHE PATENTSCHRIFT

(11) **EP 1 319 332 B1**
(45) Veröffentlichungstag und Bekanntmachung des Hinweises auf die Patenterteilung: **12.01.2005**
(21) Anmeldenummer: 01129924.5
(22) Anmeldetag: 15.12.2001
(51) Int. Cl.: A01K 1/015

(54) **Katzenstreu**
Cat litter
Litière pour chats

(43) Veröffentlichungstag der Anmeldung: 18.06.2003
(73) Patentinhaber: Arno Knof Consulting GmbH, 31592 Stolzenau-Leese (DE)
(72) Erfinder: Knof, Arno, 31592 Stolzenau-Leese (DE)
(74) Vertreter: Patentanwälte Hauck, Graalfs, Wehnert, Döring, Siemons, Schildberg

(56) Entgegenhaltungen:
- EP-A- 0 744 125
- FR-A- 2 518 897
- US-A- 5 970 915
- DATABASE WPI Section Ch, Week 199629 Derwent Publications Ltd., London, GB; Class D22, AN 1996-283360 XP002205260 & JP 08 119802 A (FUJI SILYSIA CHEM LTD), 14. Mai 1996 (1996-05-14)
- DATABASE WPI Section Ch, Week 199509 Derwent Publications Ltd., London, GB; Class D13, AN 1995-063323 XP002205261 & JP 06 339344 A (TOYODA KAKO KK), 13. Dezember 1994 (1994-12-13)
- DATABASE WPI Section Ch, Week 199621 Derwent Publications Ltd., London, GB; Class D22, AN 1996-203015 XP002205262 & JP 08 070725 A (TOYODA KAKO KK), 19. März 1996 (1996-03-19)

## Beschreibung

Die Erfindung bezieht sich auf eine Katzenstreu nach dem Patentanspruch 1.

Katzenstreu besteht üblicherweise aus einem mehr oder weniger brockigem oder körnigem Material hoher Saugfähigkeit. Es ist bekannt, für Katzenstreu Meerschaum zu verwenden (Sepiolith). Unter Meerschaum versteht man eine gelblich-weiße, graue oder rötliche undurchsichtige, matte, feinerdige, derbe oder knollige feinfaserige Masse, die zu den Phyllosilikaten gehört. Meerschaum kann im natürlichen Zustand bis zu 250% seines Gewichts an Wasser aufnehmen.

Bekannt ist ferner die Verwendung von Bentonit, das zu Klumpenbildung neigt und ein hohes Gewicht aufweist.

Es ist jedoch auch bekannt, für Katzenstreu Silica-Gel zu verwenden. Während pro Monat und Katze etwa 20 kg herkömmlicher Streu verwendet werden muss, reduziert sich diese Menge bei Silica-Gel auf ein Zehntel. Es versteht sich, dass dieses Material aus vielen Gründen vorzuziehen ist.

Silica-Gele oder Kieselgele sind kolloidale geformte oder ungeformte Kieselsäuren. Im Kieselgel liegt die Kieselsäure in Form hochkonzentrierter Polykieselsäuren mit hoher flächenreichen Blattstruktur vor. Mittlere Kieselgelqualitäten haben ca. 800 m²/g innere Oberfläche.

Kieselgel oder Silica-Gel wird in Verbindung mit Katzenstreu in zwei Ausformungen verwendet. Bei der einen wird eine brockige bzw. kristallförmige Struktur verwendet. Sie hat den Nachteil, dass die Körner bei Feuchtigkeit leicht zerfallen, wodurch der Saugeffekt stark verringert oder aufgehoben wird und sich im Behälter für die Katzenstreu schlammige Stellen bilden können.

Die andere Ausführung liegt in einer perlenartigen Körnung vor. Die einzelnen Körner haben wie die polygonalen Körner einen Durchmesser von einigen Millimetem. Die Herstellung erfolgt in der Weise, dass Wasserglas mit Mineralsäuren umgesetzt wird und das so gebildete Kieselsäurehydrosol bei entsprechender Temperatur und entsprechendem pH-Wert mit Wasser umhüllt wird. Zur Herstellung der perlenartigen Körnung werden Tropfen des Sols in Wasser gesprüht zur Bildung eines Gels, das bis zu einem Feststoffgehalt von 95% zum Xerogel getrocknet wird. Derartige Körner des Kieselgels weisen eine relativ hohe Festigkeit gegenüber Feuchtigkeit auf. Sie haben jedoch den anderen Nachteil, dass sie eine hervorragende Rolleigenschaft aufweisen. Im Gebrauch geschieht daher sehr leicht, dass Körner aus dem Behälter herausgeworfen bzw. herausgerollt werden und sich in der Umgebung verbreiten. Da die Körner auch eine hohe mechanische Festigkeit besitzen, stellen sie eine erhebliche Rutschgefahr dar.

Der Erfindung liegt daher die Aufgabe zugrunde, eine Katzenstreu aus Silica-Gel dahingehend zu verbessern, dass bei extrem hoher Saugleistung und Festigkeit die Gebrauchsfähigkeit verbessert wird.

Diese Aufgabe wird durch das Merkmal des Patentanspruchs 1 gelöst.

Bei der Erfindung werden die perlenartigen Körner in zwei oder mehr Stücke gebrochen. Die auf diese Weise erzielten Stücke haben die gleiche Saugfähigkeit wie die bisher verwendeten perlenartigen Körner, sind jedoch aufgrund ihrer Geometrie recht lagefest und gegen Feuchtigkeit beständig. Ein Herausrollen aus dem Behälter und Herumrollen in der Umgebung des Behälters wird somit vermieden.

Die Herstellung der erfindungsgemäßen Katzenstreu ist außerordentlich einfach. Das bereits bekannte herkömmliche Kieselgel in perlenartiger Körnung wird einem weiteren Brechvorgang unterworfen, indem relativ große Stücke gebrochen werden. Es reicht im Prinzip aus, wenn ein Korn in nur zwei Stücke gebrochen wird. Ein intensiverer Brechvorgang würde nur eine größere Menge an Körnern im Gefolge haben, die außerhalb des gewünschten Korngrößenbereichs fallen würden. Dieser liegt zwischen 2 und 8 mm. Erfindungsgemäß wird das Brechgut durch einen Siebvorgang vom Kornmaterial getrennt, das außerhalb der gewünschten Siebgrößen liegt. Die Größe der zu brechenden Perlen ist naturgemäß größer als für diejenigen Perlen, die derzeit für Katzenstreu verwendet werden, d.h. im Bereich von 2 bis 8 mm Durchmesser.

Da relativ feste Körner des Kieselgels gebrochen werden, weisen auch die Bruchstücke eine entsprechende Festigkeit auf, sodass im Gebrauch keine nennenswerte Beeinträchtigung der Feuchtigkeitsbindung stattfindet.

## Patentansprüche

1. Katzenstreu aus Silica-Gel in perlenartiger Körnung, wobei die Körner eine relativ hohe Festigkeit aufweisen, **dadurch gekennzeichnet, dass** die perlenartigen Körner in zwei oder mehr Stücke gebrochen sind.

2. Katzenstreu nach Anspruch 1, **dadurch gekennzeichnet, dass** die Körner im Korngrößenbereich von 2 bis 8 mm liegen.

3. Verfahren zur Herstellung einer Katzenstreu nach Anspruch 1, **gekennzeichnet durch** folgende Schritte:
- Herstellen von perlenartigen Körnern aus Silica-Gel mit einem Durchmesser von 2 bis 8 mm
- Brechen der Körner in zwei oder mehr Stücke
- Absieben der Körner nach dem Brechen, die außerhalb der gewünschten Sieblinie sind, vorzugsweise außerhalb des Größenbereichs von 2 bis 8 mm.

## Claims

1. Cat litter made of silica gel with a pearly grain, whereby the grains have a relatively high stability, **characterized in that** the pearly grains are broken into two or more pieces.

2. Cat litter in accordance with claim 1, **characterized in that** the grains lie in the grain size range of 2 to 8 mm.

3. Procedure for the production of cat litter in accordance with claim 1, **characterized by** the following steps:
- production of pearly grains made of silica gel with a diameter of 2 to 8 mm
- breaking of the grains into two or more pieces
- after breaking, screening of the grains that are outside of the desired grain-size grading curve, preferably outside of the size range of 2 to 8 mm.

## Revendications

1. Litière pour chats en granulés de gel de silice sous forme de perles, dans laquelle les granulés présentent une compacité relativement élevée, **caractérisée en ce que** les granulés sous forme de perles sont brisés en deux ou plusieurs morceaux.

2. Litière pour chats selon la revendication 1, **caractérisée en ce que** la taille des granulés comporte de 2 à 8 mm.

3. Méthode de fabrication d'une litière pour chats selon la revendication 1, **caractérisée par** les étapes suivantes :
- fabrication de granulés de gel de silice sous forme de perles possédant un diamètre de 2 à 8 mm ;
- fractionnement des granulés en deux ou plusieurs morceaux ;
- élimination par tamisage après fractionnement des granulés ne possédant pas la taille requise, celle-ci étant préférablement de 2 à 8 mm.
